Europäisches Patentamt

European Patent Office

Office européen des brevets

(11) Veröffentlichungsnummer: **0 082 905**
**B1**

(12) **EUROPÄISCHE PATENTSCHRIFT**

(45) Veröffentlichungstag der Patentschrift:
09.04.86

(51) Int. Cl.⁴: **H 04 R 3/12**

(21) Anmeldenummer: 81710059.7

(22) Anmeldetag: 24.12.81

(54) Schaltungsanordnung zur Verarbeitung, Übertragung und akustischen Wiedergabe von digitalisierten Tonfrequenzsignalen.

(43) Veröffentlichungstag der Anmeldung:
06.07.83 Patentblatt 83/27

(45) Bekanntmachung des Hinweises auf die Patenterteilung:
09.04.86 Patentblatt 86/15

(84) Benannte Vertragsstaaten:
DE FR GB IT NL

(56) Entgegenhaltungen:
DE - A - 2 424 077
US - A - 3 927 316

RADIO MENTOR ELECTRONIC, Band 43, Nr. 7, Juli 1977,
Selten 261-263, Berlin, DE. H.J. GRIESE:
"Mehrkanalanlagen mit Infrarot-Übertragung"
RADIO FERNSEHEN ELEKTRONIK, Band 26, Nr. 11, Juni
1977, Selten 380,381, Berlin, DE. "Signalübertragung
Infrarotllcht"
PATENTS ABSTRACT OF JAPAN, Band 4, Nr.
130(E-25)(612), 12. September 1980, Seite 70E25

(73) Patentinhaber: **Deutsche ITT Industries GmbH,
Hans-Bunte-Strasse 19 Postfach 840, D-7800 Freiburg
(DE)**

(84) Benannte Vertragsstaaten: **DE**

(73) Patentinhaber: **ITT INDUSTRIES INC., 320 Park Avenue,
New York, NY 10022 (US)**

(84) Benannte Vertragsstaaten: **FR GB IT NL**

(72) Erfinder: **Micic, Ljubomir, Dipl.-Ing., Sundgauallee 15,
D-7800 Freiburg i.Br (DE)**
Erfinder: **Zähringer, Edmund, Dipl.-Ing.,
Märzenstrasse 4, D-7801 Ehrenkirchen (DE)**

(74) Vertreter: **Morstadt, Volker, Dipl.-Ing., c/o Deutsche ITT
Industries GmbH Patent/Lizenzabteilung
Postfach 840 Hans-Bunte-Strasse 19,
D-7800 Freiburg/Brsg. (DE)**

## Beschreibung

Die Erfindung betrifft eine Schaltungsanordnung zur Verarbeitung, Übertragung und akustischen Wiedergabe von digitalisierten Tonfrequenzsignalen, entsprechend dem Oberbegriff des Anspruchs 1. Eine derartige Schaltungsanordnung ist in "Patents Abstracts of Japan" Bd.4, Nr. 130 (E-25) (612), vom 12. September 1980, Seite 70 E25 beschrieben. In der bekannten Anordnung liegen die Tonfrequenzsignale PCM-moduliert vor und werden über eine Laserstrecke zum Empfangsteil übertragen. Sollen jedoch beispielsweise die Signale einer Digital-Schaltungsplatte übertragen werden, so bedingen diese andersgearteten Signale auch einen anderen Aufbau der Gesamtanordnung, wie die Erfinder festgestellt haben. Derartige Signale liegen beispielsweise auf der sogenannten Digital-Schallplatte vor, zu deren Digitalisierung der sogenannte Cross-Interleave-Reed-Solomon-Code (CIR-Code) verwendet wird, vgl. die Firmenveröffentlichung von Sony Corp./N.V. Philips "Compact Disc Digital Audio" vom September 1980.

Der in den Ansprüchen gekennzeichneten Erfindung, liegt die Aufgabe zugrunde, Übertragungsfehler auf der nichtleitungsgebundenen Infrarot-Übertragungsstrecke korrigierbar zu machen.

Das Blockschaltbild einer Anordnung, bei der die Tonfrequenzsignale zusammen, wie z.B. für Lautstärke, Klangfarbe, Stereobalance etc. in einem Signalprozessor aufbereitet werden und eine Infrarot-Übertragungsstrecke durchlaufen, deren Empfängerteil mit nachgeschaltetem Leistungsverstärker in einer Lautsprecherbox angeordnet ist, wurde von der Anmelderin als Schautafel anläßlich der Internationalen Funkausstellung, Berlin, September 1981 der Öffentlichkeit zugänglich gemacht. Die Infrarot-Übertragungsstrecke enthielt dabei den Infrarot-Sender und den Infrarot-Empfänger sowie als Verbindung zwischen beiden ein Glasfaserkabel. Bei dieser Anordnung sind Übertragungsfehler nicht korrigierbar.

In der Zeitschrift "Radio Fernsehen Elektronik", Juni 1977, Seiten 380 und 381 ist ferner die übliche Infrarot-Fernsteuerung von Rundfunk-, Fernseh- und Phonogeräten beschrieben und getrennt davon auch die übliche Infrarot-Tonübertragung ("leitungsloser Kopfhörer").

Die Vorteile der Erfindung liegen zunächst unmittelbar in der Aufgabenlösung, dann aber auch darin, daß die gesamte Signalverarbeitung mittels digitaler Schaltungen durchgeführt werden kann, die vollständig monolithisch integriert werden können, betriebsstabil, digital steuerbar, störsicher und programmierbar sind. Ferner kann beim Entwurf solcher digitalen Systeme die Funktion und das Verhalten der zu realisierenden Schaltungen mittels Computern voll simuliert werden. Ein besonderer Vorteil ergibt sich bei der Erfindung dadurch, daß die digitalen Daten bis zu den Aktivboxen geführt werden können, wobei auf der Infrarot-Übertragungsstrecke die Daten einem HF-Träger aufmoduliert sind, wozu bekannte Verfahren, z.B. das sogenannte Frequency-Shift-Keying, oder ähnliche Modulationsverfahren verwendet werden können.

Die Erfindung wird nun anhand der Figuren der Zeichnung näher erläutert.

Fig. 1 zeigt schematisch in Form eines Blockschaltbilds das der Erfindung zugrundeliegende Prinzip,

Fig. 2 zeigt eine Weiterbildung der Erfindung für den Anschluß weiterer Tonsignalquellen an die Schaltungsanordnung nach Fig. 1.

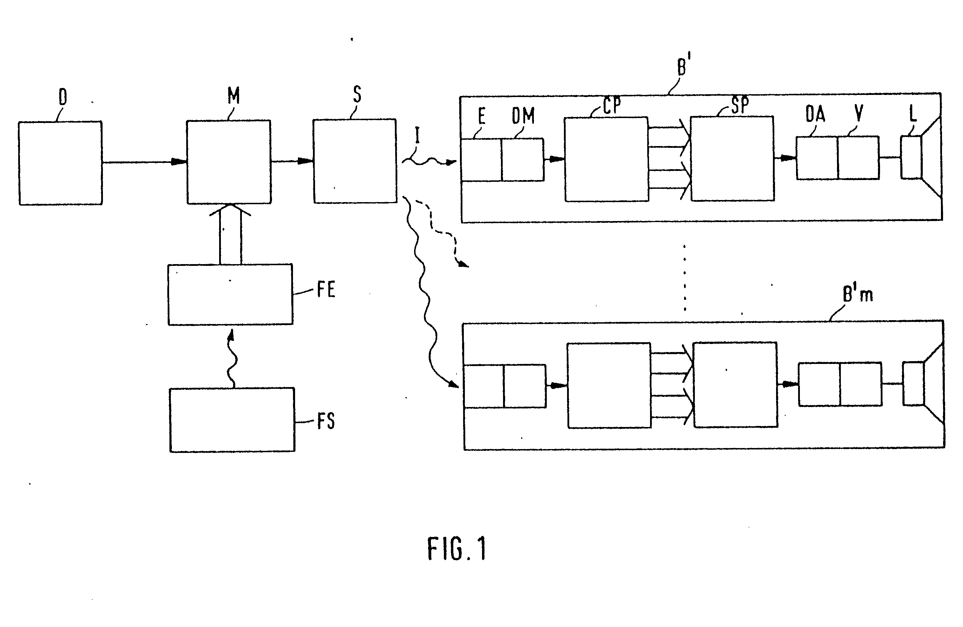

Im Blockschaltbild der Fig. 1 ist die Digitalsignal-Quelle D gezeigt, die die Tonfrequenzsignale, also beispielsweise von einem Mikrofon stammende Signale, in einem gesicherten Code codiert, d.h. in einem derart redunanten Code, daß nicht nur eine Fehlererkennung, sondern auch eine Fehlerkorrektur möchlich ist, wie z.B. der oben erwähnte CIR-Code. Im einzelnen ist bei der Anordnung nach Fig. 1 die Reihenfolge der Teilschaltungen so vorgenommen, daß die Digitalsignal-Quelle D direkt den HF-Modulator M ansteuert, dem außerdem die digitalen Steuersignale zugeführt sind, die beispielsweise aus dem Empfängerteil FE einer Fernsteuerung stammen können. Die digitalen Steuersignale können jedoch selbstverständlich auch aus einer anderen digitalen Steuer einheit stammen, die der Schaltungsanordnung nach der Erfindung zugeordnet ist. Der HF-Modulator M steuert den Senderteil S der nichtleitungsgebundenen Infrarot-Übertragungsstrecke I. Auf der Empfängerseite der Infrarot-Übertragungsstrecke I ist, mindestens eine Lautsprecherbox B' angeordnet, wobei in Fig. 1 von der möglichen Anzahl lediglich die beiden Lautsprecherboxen B', Bm' gezeigt sind. Innerhalb der Lautsprecherbox B' sind in der angegebenen Reihenfolge die folgenden Teilschaltungen signalflußmäßig hintereinandergeschaltet: Empfängerteil E, HF-Demodulator DM, Codewander-Fehlerkorrektur-Prozessor CP, Signalprozessor SP, Digital-Analog-Wandler DA, Leistungsverstärker V und Lautsprecher L.

Der Codewandler-Fehlerkorrektur-Prozessor CP nimmt die erforderliche Fehlerkorrektur vor und wandelt den Code der Quelle D in einen z.B. nicht redundanten Code. Die weitere Verarbeitung der digitalisierten Tonfrequenzsignale erfolgt dann aufgrund dieses Codes im Signalprozessor SP, dem die Ausgangssignale des Codewandler-Fehlerkorrekturprozessors CP parallel zugeführt sind, ebenso wie die beispielsweise aus dem Fernsteuerempfänger FE stammenden digitalen Steuersignale, die dieser vom Fernsteuersender FS übermittelt erhält.

Wenn einem einzigen Senderteil S mehrere Lautsprecherboxen B', Bm' zugeordnet sind, so können für jede Lautsprecherbox entsprechende, von denen der anderen Lautsprecherboxen unterschiedene Steuersignale vorgesehen werden. Bei mehreren Lautsprecherboxen und einem einzigen Senderteil S ist es ferner erforderlich, daß jeder Lautsprecherbox eine eigene Trägerfrequenz des HF-Modulators M zugeordnet wird.

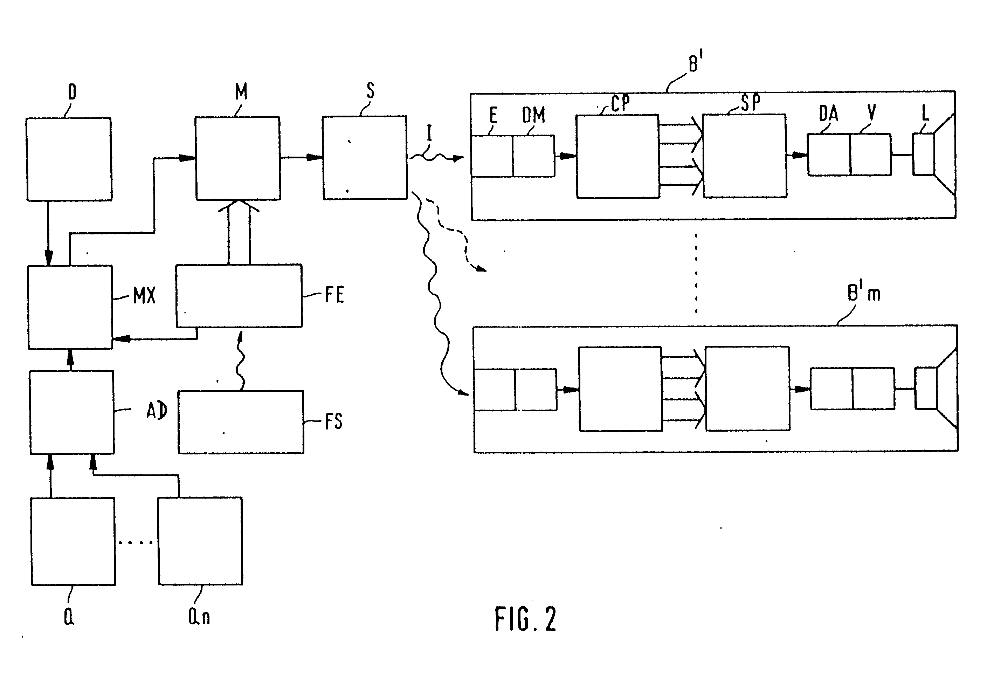

Die Fig. 2 zeigt eine Weiterbildung der prinzipiellen Anordnung nach Fig. 1, und zwar dahingehend, daß nicht nur die Digitalsignal-Quelle D sondern auch weitere Tonfrequenzquellen Q, Qn angeschlossen werden können. Hierzu ist es erforderlich, einen Multiplexer MX anzuordnen, dem über den Analog-Digital-Wandler AD die Signale der weiteren Tonfrequenzsignale-Quellen Q, Qn zugeführt sind. Zweckmäßigerweise wird der Multiplexer MX aus der Quelle für die Steuersignale mitgesteuert, also beispielsweise aus dem Fernsteuerempfänger FE. Durch die Weiterbildung entsprechend Fig. 2 ist es somit möglich, in einer Phonoanlage beispielsweise nicht nur Digitalschallplatten abzuspielen, sondern die Anlage auch mit weiteren Tonfrequenzsignal-Quellen üblicher Art, also z.B. Casettenrecorder, Radio oder übliche Plattenspieler zu betreiben.

Auf eine eigene Trägerfrequenz für jede Aktivbox kann man verzichten, sofern man auf einem HF-Träger, z.B. in Zeitmultiplex, Signale für mehrere Lautsprecherboxen überträgt. In den verschiedenen Empfangsschaltungen werden dann die jeweils erwünschten Signale aus dem Gesamtdatenstrom extrahiert.

**Patentansprüche**

Schaltungsanordnung zur Verarbeitung, Übertragung und akustischen Wiedergabe von digitalisierten Tonfrequenzsignalen, die einem HF-Modulator (M) zugeführt sind, der den Senderteil (S) einer nichtleitungsgebundenen Infrarot-Übertragungsstrecke (I) steuert, deren Empfängerteil (E) mit nachgeschaltetem Verstärker baulich mit einem elektroakustischen Wandler vereinigt ist und dem in der folgenden Reihenfolge ein HF-Demodulator (DM), ein Digital-Analog-Wandler (DA), der Verstärker und der akustische Wandler nachgeschaltet sind, gekennzeichnet durch folgende Merkmale:
- zusammen mit den Tonfrequenzsignalen werden digitale Steuersignale, wie z.B. für Lautstärke, Klangfarbe, Stereo-Balance, Basisbreite etc., in einem Signalprozessor (SP) aufbereitet,
- die Tonfrequenzsignale und die Steuersignale sind in einem gesicherten Code codiert,
- als elektroakustischer Wandler dient ein in einer Lautsprecherbox (B') angeordneter Lautsprecher (L), in der folgende Teilschaltungen in Signalflußrichtung angeordnet sind:
- der Empfangsteil (E),
- der HF-Demodulator (DM)
- ein Codewandler-Fehlerkorrektur-Prozessor (CP)

- der Signalprozessor (SP),
- der Digital-Analog-Wandler (DA) und
- der als Leistungsverstärker (V) ausgebildete Verstärker.

2. Schaltungsanordnung nach Anspruch 1, dadurch gekennzeichnet, daß vor dem HF-Modulator (M) ein Multiplexer (MX) angeordnet ist, dessen weitere Signaleingänge mit dem Ausgang eines Analog-Digital-Wandlers (AD) für weitere Tonfrequenzsignale verbunden ist.

3. Schaltungsanordnung nach Anspruch 1 oder 2 dadurch gekennzeichnet, daß einem einzigen Senderteil (S) der nichtleitungsgebundenen Infrarot-Übertragungsstrecke (I) mehrere Lautsprecherboxen (B...Bm; B'....B'm) mit jeweiligem Empfängerteil etc. zugeordnet sind.

4. Schaltungsanordnung nach den Ansprüchen 2 und 3 dadurch gekennzeichnet, daß für jede Lautsprecherbox (B...Bm; B'...B'm) entsprechende, von denen der anderen Lautsprecherboxen unterschiedene Steuersignale vorgesehen sind.

5. Schaltungsanordnung nach Anspruch 3 oder 4, dadurch gekennzeichnet, daß jeder Lautsprecherbox eine eigene Trägerfrequenz des HF-Modulators (M) zugeordnet ist.

6. Verwendung der Schaltungsanordnung nach einem der Ansprüche 1 bis 5 zur Wiedergabe von Signalen die im Cross-Interleave-Reed-Solomon-Code (CIR-Code) codiert auf Digital-Schallplatten vorliegen.

**Claims**

1. Circuit arrangement for processing transmitting, and acoustically reproducing digitized audio-frequency signals which are fed to an RF modulator (M) controlling the transmitter (S) of a wireless infrared transmission link (I) whose receiver (E) and a following amplifier are structurally united with an electro-acoustic transducer, and which is followed by an RF demodulator (DM), a digital-to-analog converter (DA), the amplifier, and the electro-acoustic transducer,
characterized by the following features:
- Together with the audio-frequency signals, digital control signals for, e.g., volume, tone, stereo balance base width, etc. are processed in a signal processor (SP);
- the audio-frequency signals and the control signal are coded in a protected code;
- the electro-acoustic transducer is a loudspeaker (L) which is enclosed in a loudspeaker box (B') and contains the following subcircuits in the direction of signal flow:
- the receiver (E),
- the RF demodulator (DM),
- a code-conversion/error-correction processor (CP),
- the signal processor (SP),
- the digital-to-analog converter (DA), and
- the amplifier (V), which is designed as a power amplifier.

2. A circuit arrangement as claimed in claim 1, characterized in that the RF modulator (M) is preceded by a multiplexer (MX) whose other signal inputs are connected to the output of an analog-to-digital converter (AD) for further audio-frequency signals.

3. A circuit arrangement as claimed in claim 1 or 2, characterized in that a plurality of loudspeaker boxes (B...Bm; B'...B'm) each containing a receiver etc. are associated with a single transmitter (S) of the wireless infrared transmission link (I).

4. A circuit arrangement as claimed in claims 2 and 3, characterized in that corresponding control signals are provided for each loudspeaker box (B...Bm; B'...B'm) which differ from those for the other loudspeaker boxes.

5. A circuit arrangement as claimed in claims 3 or 4, characterized in that each loudspeaker box is assigned its own carrier frequency of the RF modulator (M).

6. Use of the circuit arrangement claimed in any one of claims 1 to 5 for reproducing signals which are present on digital disks in the Cross Interleave Reed Solomon code (CIR code).

**Revendications**

1. Agencement de circuits pour le traitement, la transmission, et la restitution sonore de signaux à fréquence acoustique numérisés qui sont amenés à un modulateur HF (M) commandant la partie émetteur (S) d'un trajet (I) de transmission infrarouge sans ligne, la partie récepteur (E) suivie d'un amplificateur étant, du point de vue de la construction, réunie à un convertisseur électroacoustique et suivie, dans l'ordre ci-après, d'un démodulateur HF (DM), d'un convertisseur numérique-analogique (DA), de l'amplificateur et du convertisseur électro-acoustique,

   caractérisé par les caractéristiques suivantes:

- des signaux de commande numériques, par exemple pour niveau sonore, tonalité, balance stéréo, largeur de bande,etc., sont traités, ainsi que les signaux à fréquence acoustique, dans un processeur de signaux (SP),

- les signaux à fréquence acoustique et les signaux de commande sont encodés selon un code protégé,

- comme convertisseur électro-acoustique, on utilise un hautparleur (L) agencé dans une enceinte (B') dans laquelle les éléments de circuits suivants sont disposés dans l'ordre correspondant au flux de signaux:

   - la partie récepteur (E),
   - le démodulateur HF (DM),
   - un processeur (CP) de correction d'erreur-conversion de code,
   - le processeur de signaux (SP),
   - le convertisseur numérique-analogique (DA), et
   - l'amplificateur réalisé en tant qu'amplificateur de puissance (V).

2. Agencement de circuits selon la revendication 1, caractérisé en ce qu'en amont du modulateur HF (M) est agencé un multiplexeur (MX) dont d'autres entrées de signaux sont reliées à la sortie d'un convertisseur analogique-numérique (AD) pour d'autres signaux à fréquence acoustique.

3. Agencement de circuits selon la revendication 1 ou 2, caractérisé en ce qu'à une seule partie émetteur (S) du trajet (I) de transmission infrarouge sans ligne sont associées plusieurs enceintes de haut-parleur (B... Bm; B'... B'm) ayant chacune une partie récepteur.

4. Agencement selon les revendications 2 et 3, caractérisé en ce qu'il est prévu, pour chaque enceinte de haut-parleur (B... Bm; B'... B'm), des signaux de commande correspondants, différant de ceux des autres enceintes de haut-parleur.

5. Agencement de circuits selon la revendication 3 ou 4, caractérisé en ce qu'à chaque enceinte de haut-parleur est affectée en propre une fréquence porteuse du modulateur HF (M).

6. Utilisation de l'agencement de circuits selon l'une quelconque des revendications 1 à 5, pour restituer des signaux codés présents sur disque numérique et codés selon le code dit Cross-Interleave-Reed-Solomon (code CIR).

FIG. 1

FIG. 2

0 082 905